# EUROPEAN PATENT SPECIFICATION

(11) **EP 3 659 446 B1**
(45) Date of publication and mention of the grant of the patent: **27.10.2021**
(21) Application number: 19209082.7
(22) Date of filing: 14.11.2019
(51) Int. Cl.: A23N 12/08, A23N 12/10

(54) **SYSTEM FOR ROASTING COFFEE GRAINS**
SYSTEM ZUM RÖSTEN VON KAFFEEBOHNEN
SYSTÈME DE TORRÉFACTION DE GRAINS DE CAFÉ

(30) Priority: 27.11.2018 IT 201800010625
(43) Date of publication of application: 03.06.2020
(73) Proprietor: I.M.F. Industria Macchine Ferrarese S.r.l., 45030 Fraz. Santa Maria Maddalena (RO) (IT)
(72) Inventor: GARBIN, Alessandro, 40037 Sasso Marconi (Bologna) (IT)
(74) Representative: Studio Torta S.p.A.

(56) References cited:
- EP-A1- 3 178 330
- WO-A1-2009/049860
- WO-A1-2011/055212
- DE-A1- 2 207 803

## Description

This invention relates to a system for roasting coffee grains, in particular for roasting green coffee grains.

Systems have been used for some time for the roasting processes of green coffee grains which are able to generate heat which, with various methods such as convection, contact/conduction or irradiation, strike the grains at a predetermined temperature for roasting the grain.

Currently, the most commonly used process is by convection with hot air, since the coffee grain avoids direct contact with a heat source so as to allow a uniform roasting of the product. The coffee grain is then cooled (with ambient air or forced air) to allow the enhancement of the fragrance.

The main components of the systems for roasting coffee grains by convection comprise:
- a combustion chamber for heating the air (having a burner designed to heat the air present inside the combustion chamber);
- a hopper for feeding green coffee grains;
- a rotary drum for roasting coffee grains (comprising screws or flaps for turning the product) connected, on one side, to the hopper for feeding the grains to be roasted and, on the other side, to the combustion chamber, by means of a suitable conduit, for the flow of hot air for roasting the grains;
- a tank for cooling the roasted grains equipped with a suitable channel for discharging the roasted grains coming from the drum;
- a decanting cyclone connected to the roasting drum in such a way as to receive a flow of hot air mixed with aerial and/or solid impurities from the drum, that is to say, solid bodies separated from the coffee grains during the roasting step (for example, films or particles of impurities); the cyclone is also equipped with a conduit for the discharging and outflow of the flow of air with impurities to the outside of the system.

A system for roasting coffee grains which is very similar to the system just described above is known from patent document EP 3 178 330.

The various components of the system are equipped with temperature probes connected to a control unit to allow the measurement of the operating temperatures inside the combustion chamber, the connecting conduits, the roasting drum and the decanting silo and to modify them according to the operating steps for roasting the coffee grains.

This check is necessary since the roasting cycle must comprise a step of "drying" the grain which must be performed in a sufficiently fast manner, in such a way that the water present inside the coffee grain evaporates (with a reduction in weight and an increase in volume of the grain) and humidifies the surrounding environment, that is to say, the rotation drum, allowing the contact of the coffee grains with the drum itself to be more delicate and not allow, during the actual roasting step, the so-called "scorching" phenomenon, that is to say, the presence of small blackened areas on the surface of the grain, due to the loss of surface materials, caused by excessive contact with the metal wall of the rotation cylinder. Subsequently, there is the actual step of roasting the grains which must occur with a gradual and constant increase in the temperature inside the grain to obtain an optimum roasting.

In other words, the air must initially enter the drum and keep in the drum a high temperature (at least 300/400°) in order to dry the grains; then it is necessary to reduce the temperature inside the drum (approx. 200-220°) in order to obtain a correct roasting of the grains in variable processing times according to the type of grain present.

However, on the basis of this procedure the type of roasting systems described above have several drawbacks.

The presence of a gas burner for generating the flow of hot air directed towards the drum requires relatively long reaction times for modifying the temperature variations to be performed inside the drum.

This factor together with the precise times necessary for the correct roasting process and combined with the above-mentioned temperatures can determine a low quality of the roasting of the grains.

Moreover, the step of drying the grains determines a high generation of fumes (that is, air with a high rate of impurities) which are channelled towards the decanting cyclone for the purification.

In this case, in order to obtain a correct purification of the environment it would be necessary to increase the temperature of the air flow to incinerate the impurities, but normally during this step the burner must reduce the temperature to allow a correct roasting of the grains.

An increase in temperature, however, could determine an incorrect process for roasting coffee grains.

For this reason, the outflow conduit must be equipped with one or more catalytic filters for retaining the solid particles and discharging cleaner air without necessarily increasing the temperature of the air.

The presence of these catalytic filters increases, in effect, the overall cost of the system as well as making it necessary to periodically check the filters with a frequency greater than that of the normal checks performed on the system.

The aim of the invention is to provide a system for roasting coffee grains which overcomes the above-mentioned disadvantages of the prior art. More specifically, the aim of the invention is to provide a system for roasting coffee grains which is able to prevent thermal transients in the roasting drum, that is to say, maintaining the temperature of the air required in a regular and continuous fashion.

A further aim of the invention is to provide a system for roasting coffee grains which is able to speed up the roasting steps whilst maintaining a high final quality of the product together with a reduction in the overall costs of both the system and its maintenance.

These aims are fully achieved by the system for roasting coffee grains according to the invention as characterised in the appended claims.

The main features of the invention will become more apparent from the following detailed description of a preferred, non-limiting embodiment of it, illustrated by way of example in the accompanying drawings, in which:
- Figure 1 is a diagram of the roasting system according to the invention;
- Figure 2 is a schematic front view, with some parts in cross section and others cut away to better illustrate some technical details, of a detail A relative to Figure 1 and referred to a T-shaped tubular body with valve elements;
- Figures 3 to 5 illustrate corresponding schematic cross sections of the cylindrical tubular body of Figure 2 in corresponding operating positions of the valve elements inside the tubular body.

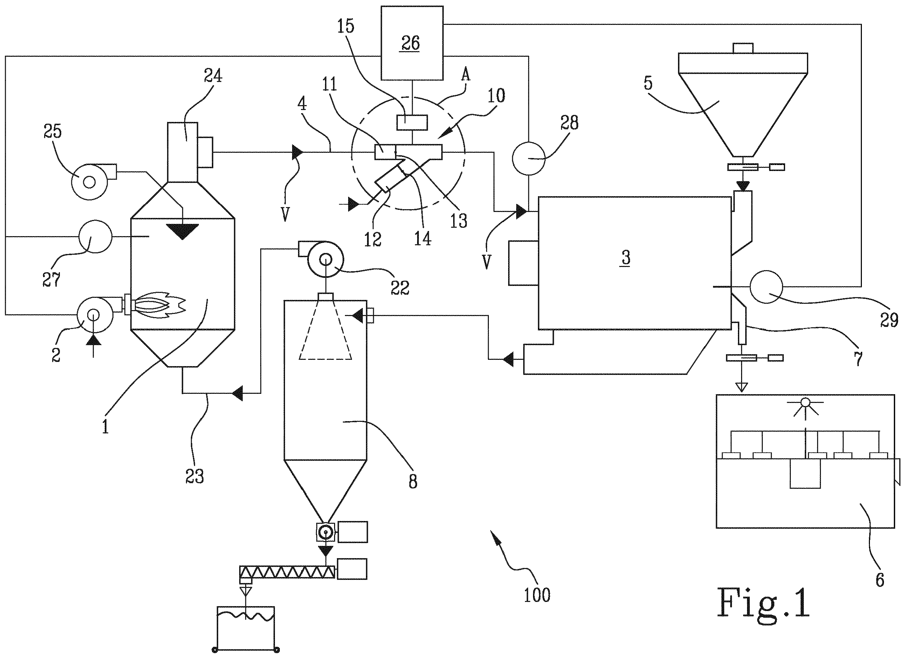

With reference to the accompanying drawings, in particular Figure 1, the system according to the invention, labelled 100 in its entirety, is used for roasting grains of green coffee.

The main parts of the system 100 comprise a combustion chamber 1 equipped with a unit 2 for generating heat which is able to heat air (for example, but without limiting the scope of the invention, a gas burner). The system 100 also comprises a rotary drum 3 for roasting coffee grains. The system 100 comprises a first conduit 4 for connecting between the combustion chamber 1 and the rotary drum 3 for the passage of hot air from the combustion chamber 1 to the rotary drum 3 in a feed direction V. The system 100 also comprises a decanting cyclone 8 connected, with a second conduit 9, to the rotary drum 3 in such a way as to receive a flow of hot air mixed with aerial and/or solid impurities from the rotary drum 3 and formed during the roasting.

As illustrated, the system 100 also comprises at least one hopper 5 for feeding the grains to be roasted connected to the rotary drum 3. Moreover, the system 100 comprises a tank 6 for cooling the roasted grains equipped with a channel 7 for discharging the roasted grains coming from the rotary drum 3.

Again as illustrated, the system 100 comprises a tubular body 10 with two channels 11, 12 positioned on the first conduit 4 for connecting between the combustion chamber 1 and the rotary drum 3.

The tubular body 10 is equipped with a first 13 and second 14 valve in such a way as to intercept, on a first channel 11 and with a first valve 13, the flow of hot air coming from the combustion chamber 1 and with the second channel 12 and the second valve 14 configured for intercepting air outside the system 100, at a temperature less than the flow of air arriving from the combustion chamber 1, and feeding it into the first conduit 4 downstream of the first valve 11, with respect to the feed direction V, in such a way as to modify the temperature of the mixed flow of air entering the rotary drum 3.

A control device 15 is connected to the first 13 and second 14 valve for modifying their position inside the corresponding first 11 and second 12 channel in such a way as to modify the corresponding flow rate of the air flows as a function of the temperature required inside the rotary drum 3.

In other words, it is possible to obtain the correct roasting temperature inside the rotary drum irrespective of the temperature inside the combustion chamber.

In this way, the combustion chamber can operate at a constant steady state since the temperature in the drum is modulated downstream of the combustion chamber by means of the two-way system present on the first conduit with the respective valves.

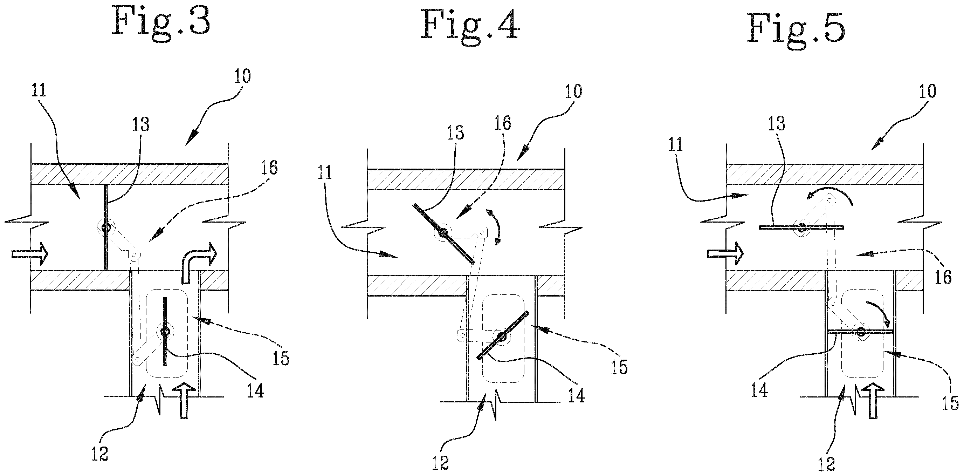

As illustrated, the control device 15 has means 16 for connecting to the first 13 and second valve 14 in such a way as to simultaneously move the first 13 and second valve 14 between several intermediate operational positions (of which one is visible in Figure 4) included between a first end operating position, wherein the first valve 13 is positioned in such a way as to completely close the first conduit 4 for feeding the flow of air from the combustion chamber 1 and, simultaneously, the second valve 14 is positioned in such a way as to keep completely open the second channel 12 (Figure 3), and a second end operating position, wherein the first valve 13 is positioned in such a way as to keep fully open the first conduit 4 for feeding the flow of air from the combustion chamber 1 and, simultaneously, the second valve 14 is positioned in such a way as to completely close the second channel 12 (Figure 5).

In this way it is possible to modulate the temperature from a fast cooling of the rotary drum (valves configuration of Figure 3) to a fast heating of the drum (valves configuration of Figure 5), or modify in a modulated fashion the temperature in the rotary drum with a configuration as shown in Figure 4.

It should be noted that the tubular body 10 with two channels 11, 12 is of the "T" type equipped with two sections of channel with a circular cross-section.

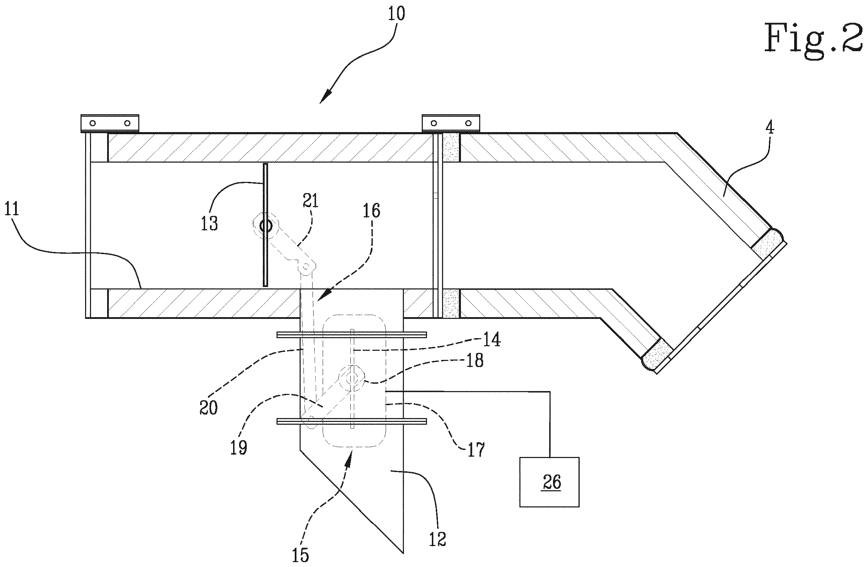

In light of this, the first section of channel 11 defines a coaxial joint on the first connecting conduit 4 between the combustion chamber 1 and the rotary drum 3 (see Figure 2).

In an example, non-limiting embodiment according to the invention, each first 13 and second 14 valve is of the butterfly type and are each formed by a circular plate hinged on the corresponding first 11 and second 12 channel in such a way as to be able to rotate about a central axis. Preferably, the control device 15 comprises an actuator 17 (for example of the electro-mechanical type and schematically illustrated in Figure 2) associated with the tubular body 10 and equipped with means 16 for connecting to the first 13 and second 14 valve to allow the synchronised movement of the first 13 and second 14 valve.

In light of this, the actuator 17 is associated outside the second channel 12 and equipped with the connecting means 16 comprising a motor-driven shaft 18 connected to the second valve 14 to allow the controlled rotation of the second valve 14.

On the shaft 18 is keyed the end of a first connecting rod 19 in turn hinged on a shaft 20 for driving and connection to a second connecting rod 21 connected to the first valve 13 in such a way as to allow the simultaneous movement of the first 13 and second 14 valve by a single activation of the motor-driven shaft 18.

The system 100 also comprises a suction unit 22 associated with the decanting cyclone 8 and configured for the recirculation of air in such a way as to pick up from the decanting cyclone (8) the aerial impurities and convey them, using a third conduit 23, to the combustion chamber 1 to allow the recovery of residual heat arriving from the rotary drum 3 and reducing the solid particles present through a discharging flue 24 made in the combustion chamber 1.

It should be noted that the suction unit 22 generates a negative pressure circuit in the form of a compound closed loop at least from the first conduit 4, from the rotary drum 3 and from the decanting cyclone 8 in such a way as to allow a constant and correct flow of hot air and/or ambient air from the first conduit 4.

The system 100 also comprises a unit 25 for auxiliary introduction of air leading into the combustion chamber 1 to obtain, when required, a step of post-combustion of fumes to be directed towards a discharging flue 24. Moreover, the system 100 comprises a command and control unit 26 connected at least to the combustion chamber 1 and to the first 13 and second 14 valve to allow the modulation of the flow of air and its temperature inside the rotary drum 3.

In light of this, the command and control unit 26 is connected at least to a first temperature sensor 27 positioned inside the combustion chamber 1, to a second temperature sensor 28 positioned on the first connecting conduit 4 downstream of the tubular body 10, and a third temperature sensor 29 positioned inside the rotary drum 3.

In this way, the command and control unit 26 is always updated on the operating temperatures present and can modify, for example, the position of the valves, or increase or decrease (if necessary) the temperature inside the combustion chamber.

A system structured in this way brings numerous advantages, including:
- optimising the roasting cycle thanks to an accurate control of the air flows and its temperature inside the drum;
- insulating the combustion chamber from the roasting drum thanks to the valves on the first conduit in such a way as to allow the maintaining of high and constant temperatures in the combustion chamber;
- the presence of the negative pressure system makes it possible to optimise and speed up the flow of air entering and leaving with the use of the system for discharging the flow of air with impurities directly in the combustion chamber which, thanks to the high temperature present may directly reduce the particulates and the relative emissions towards the flue thanks to the possibility of having a post-burner.

The latter function allows the system not to have a catalyst filter.

## Claims

1. A system (100) for roasting coffee grains comprising at least:
- a combustion chamber (1) equipped with a unit (2) for generating heat which is able to heat air;
- a rotary drum (3) for roasting coffee grains;
- a first conduit (4) for connecting between the combustion chamber (1) and the rotary drum (3) for the passage of hot air from the combustion chamber (1) to the rotary drum (3) in a feed direction (V);
- a tubular body (10) with two channels (11, 12) positioned on the first connecting conduit (4) between the combustion chamber (1) and the rotary drum (3); the tubular body (10) being equipped with a first (13) and second (14) valve in such a way as to intercept, on a first channel (11) and with a first valve (13), the flow of hot air coming from the combustion chamber (1) and with the second channel (12) and the second valve (14) configured for intercepting air outside the system (100), at a temperature less than the flow of air arriving from the combustion chamber (1), and feeding it into the first conduit (4) downstream of the first valve (13), with respect to the feed direction (V), in such a way as to modify the temperature of the mixed flow of air entering the rotary drum (3);
- a control device (15) being connected to the first (13) and second (14) valve for modifying their position inside the corresponding first (11) and second (12) channel in such a way as to modify the corresponding flow rate of the air flows as a function of the temperature required inside the rotary drum (3);
**characterised in that** the control device (15) has means (16) for connecting to the first (13) and second valve (14) in such a way as to simultaneously move the first (13) and second valve (14) between several intermediate operational positions included between a first end operating position, wherein the first valve (13) is positioned in such a way as to completely close the first conduit (4) for feeding the flow of air from the combustion chamber (1) and, simultaneously, the second valve (14) is positioned in such a way as to keep completely open the second channel (12), and a second end operating position, wherein the first valve (13) is positioned in such a way as to keep fully open the first conduit (4) for feeding the flow of air from the combustion chamber (1) and, simultaneously, the second valve (14) is positioned in such a way as to completely close the second channel (12).

2. The system according to claim 1, wherein the tubular body (10) with two channels (11, 12) is "T" shaped, equipped with two sections of channel with a circular cross section; the first section of channel (11) defining a coaxial joint on the first conduit (4) for connecting between the combustion chamber (1) and the rotary drum (3).

3. The system according to any one of the preceding claims, wherein each first (13) and second (14) valve is of the butterfly type and are each formed by a circular plate hinged on the corresponding first (11) and second (12) channel in such a way as to be able to rotate about a central axis.

4. The system according to any one of the preceding claims, wherein the control device (15) comprises an actuator (17) associated with the tubular body (10) and equipped with means (16) for connecting to the first (13) and second (14) valve to allow the synchronised movement of the first (13) and second (14) valve.

5. The system according to claim 4, wherein the actuator (17) is associated externally to the second channel (12) and equipped with the connecting means (16) comprising a motor-driven shaft (18) connected to the second valve (14) to allow the controlled rotation of the second valve (14); on the shaft (18) is keyed the end of a first connecting rod (19) in turn hinged on a shaft (20) for driving and connection to a second connecting rod (21) connected to the first valve (13) in such a way as to allow the simultaneous movement of the first (13) and second (14) valve by a single activation of the motor-driven shaft (18).

6. The system according to any one of the preceding claims, comprising a decanting cyclone (8) connected, with a second conduit (9), to the rotary drum (3) in such a way as to receive a flow of hot air mixed with aerial and/or solid impurities from the rotary drum (3) and formed during the roasting.

7. The system according to claim 6, comprising a unit (22) associated with the decanting cyclone (8) and configured for the recirculation of air in such a way as to pick up from the decanting cyclone (8) the aerial impurities and convey them, using a third conduit (23), to the combustion chamber (1) to allow the recovery of residual heat arriving from the rotary drum (3) and reducing the solid particles through a discharging flue (24) made in the combustion chamber (1).

8. The system according to claim 7, wherein the suction unit (22) generates a negative pressure circuit in the form of a compound closed loop from the combustion chamber (1), from the rotary drum (3) and from the decanting cyclone (8) in such a way as to allow a constant and correct flow of hot air and ambient air from the first conduit (4).

9. The system according to any one of the preceding claims, comprising a unit (25) for auxiliary introduction of air leading into the combustion chamber (1) to obtain, when required, a step of post-combustion of fumes to be directed towards a discharging flue (24).

10. The system according to anyone of the preceding claims, comprising a command and control unit (26) connected at least to the combustion chamber (1) and to the first (13) and second (14) valve to allow the modulation of the flow of air and its temperature inside the rotary drum (3); the command and control unit (26) being connected to at least a first temperature sensor (27) positioned inside the combustion chamber (1), to a second temperature sensor (28) positioned on the first connecting conduit (4) downstream with respect to the tubular body (10), and a third temperature sensor (29) positioned inside the rotary drum (3).

## Patentansprüche

1. Ein System (100) zum Rösten von Kaffeebohnen, umfassend zumindest:
- eine Verbrennungskammer (1), die mit einer Wärmeerzeugungseinheit (2) ausgestattet ist, die in der Lage ist, Luft zu erwärmen;
- eine Drehtrommel (3) zum Rösten von Kaffeebohnen;
- eine erste Leitung (4) zur Verbindung zwischen der Verbrennungskammer (1) und der Drehtrommel (3) für den Durchgang von heißer Luft von der Verbrennungskammer (1) zur Drehtrommel (3) in einer Zufuhrrichtung (V);
- einen rohrförmigen Körper (10) mit zwei Kanälen (11, 12), der auf der ersten Verbindungsleitung (4) zwischen der Verbrennungskammer (1) und der Drehtrommel (3) positioniert ist; wobei der rohrförmige Körper (10) mit einem ersten (13) und einem zweiten (14) Ventil derart ausgestattet ist, an einem ersten Kanal (11) und mit einem ersten Ventil (13) den von der Verbrennungskammer (1) kommenden Heißluftstrom aufzufangen, und mit dem zweiten Kanal (12) und dem zweiten Ventil (14) dazu konfiguriert ist, Luft außerhalb des Systems (100) mit einer geringeren Temperatur als der von der Verbrennungskammer (1) kommende Luftstrom aufzufangen und in die erste Leitung (4) stromabwärts des ersten Ventils (13) in Bezug auf die Zufuhrrichtung (V) derart zuzuführen, dass die Temperatur des in die Drehtrommel (3) eintretenden gemischten Luftstroms verändert wird;
- eine Steuervorrichtung (15), die mit dem ersten (13) und dem zweiten (14) Ventil verbunden ist, um deren Position innerhalb des entsprechenden ersten (11) und zweiten (12) Kanals derart zu verändern, dass die entsprechende Durchflussrate der Luftströme in Abhängigkeit von der erforderlichen Temperatur innerhalb der Drehtrommel (3) verändert wird;
**dadurch gekennzeichnet, dass** die Steuervorrichtung (15) Mittel (16) zur Verbindung mit dem ersten (13) und dem zweiten Ventil (14) derart aufweist, dass das erste (13) und das zweite Ventil (14) gleichzeitig zwischen mehreren Zwischenbetriebspositionen bewegt werden, die zwischen einer ersten Endbetriebsposition, in der das erste Ventil (13) derart positioniert ist, dass dieses die erste Leitung (4) zum Zuführen des Luftstroms aus der Verbrennungskammer (1) vollständig verschließt, und gleichzeitig das zweite Ventil (14) derart positioniert ist, dass dieses den zweiten Kanal (12) vollständig offen hält, und eine zweite Endbetriebsposition, in der das erste Ventil (13) derart positioniert ist, dass dieses die erste Leitung (4) zum Zuführen des Luftstroms aus der Verbrennungskammer (1) vollständig offen hält, und gleichzeitig das zweite Ventil (14) derart positioniert ist, dass dieses den zweiten Kanal (12) vollständig verschließt, eingeschlossen sind.

2. System nach Anspruch 1, wobei der rohrförmige Körper (10) mit zwei Kanälen (11, 12) T-förmig ausgebildet ist und mit zwei Kanalabschnitten mit kreisförmigem Querschnitt ausgestattet ist, wobei der erste Kanalabschnitt (11) eine koaxiale Verbindung an der ersten Leitung (4) zur Verbindung zwischen der Verbrennungskammer (1) und der Drehtrommel (3) definiert.

3. System nach einem der vorhergehenden Ansprüche, wobei das erste (13) und zweite (14) Ventil jeweils vom Klappentyp sind und jeweils durch eine kreisförmige Platte gebildet sind, die an dem entsprechenden ersten (11) und zweiten (12) Kanal derart eingehängt ist, dass diese um eine zentrale Achse drehbar ist.

4. System nach einem der vorhergehenden Ansprüche, wobei die Steuervorrichtung (15) einen Aktuator (17) umfasst, der mit dem rohrförmigen Körper (10) verbunden ist und mit Mittel (16) zur Verbindung mit dem ersten (13) und zweiten (14) Ventil ausgestattet ist, um die synchronisierte Bewegung des ersten (13) und zweiten (14) Ventils zu ermöglichen.

5. System nach Anspruch 4, wobei der Aktuator (17) außerhalb des zweiten Kanals (12) verbunden ist und mit dem Verbindungsmittel (16) ausgestattet ist, das eine motorgetriebene Welle (18) umfasst, die mit dem zweiten Ventil (14) verbunden ist, um die gesteuerte Drehung des zweiten Ventils (14) zu ermöglichen; wobei auf der Welle (18) das Ende einer ersten Verbindungsstange (19) verzahnt ist, die ihrerseits an einer Welle (20) zum Antrieb und zur Verbindung mit einer zweiten Verbindungsstange (21) eingehängt ist, die mit dem ersten Ventil (13) derart verbunden ist, dass die gleichzeitige Bewegung des ersten (13) und des zweiten (14) Ventils durch eine einzige Betätigung der motorgetriebenen Welle (18) ermöglicht wird.

6. System nach einem der vorhergehenden Ansprüche, umfassend einen Dekantierzyklon (8), der über eine zweite Leitung (9) mit der Drehtrommel (3) derart verbunden ist, dass dieser einen Heißluftstrom aufnimmt, der mit luftförmigen und/oder festen Verunreinigungen aus der Drehtrommel (3) vermischt ist und während des Röstens entsteht.

7. System nach Anspruch 6, umfassend eine Einheit (22), die mit dem Dekantierzyklon (8) verbunden ist und für die Rückführung von Luft derart konfiguriert ist, die luftförmigen Verunreinigungen aus dem Dekantierzyklon (8) aufzunehmen und sie unter Verwendung einer dritten Leitung (23) zur Verbrennungskammer (1) zu fördern, um die Rückgewinnung von Restwärme zu ermöglichen, die von der Drehtrommel (3) kommt, und die festen Partikel durch einen in der Verbrennungskammer (1) gebildeten Abzugskanal (24) zu reduzieren.

8. System nach Anspruch 7, wobei die Absaugeinheit (22) einen Unterdruckkreislauf in Form eines geschlossenen Verbundkreislaufs aus der Verbrennungskammer (1), der Drehtrommel (3) und dem Dekantierzyklon (8) derart erzeugt, dass ein konstanter und korrekter Strom von Heißluft und Umgebungsluft aus der ersten Leitung (4) ermöglicht wird.

9. System nach einem der vorhergehenden Ansprüche, umfassend eine Einheit (25) für die zusätzliche Zufuhr von Luft in die Verbrennungskammer (1), um bei Bedarf einen Schritt der Nachverbrennung von Rauchgasen zu erreichen, die zu einem Abzugskanal (24) geleitet werden.

10. System nach einem der vorhergehenden Ansprüche, umfassend eine Befehls- und Regeleinheit (26), die zumindest mit der Verbrennungskammer (1) und dem ersten (13) und zweiten (14) Ventil verbunden ist, um die Modulation des Luftstroms und seiner Temperatur in der Drehtrommel (3) zu ermöglichen; wobei die Befehls- und Regeleinheit (26) mit mindestens einem ersten Temperatursensor (27), der in der Verbrennungskammer (1) positioniert ist, mit einem zweiten Temperatursensor (28), der an der ersten Verbindungsleitung (4) stromabwärts in Bezug auf den rohrförmigen Körper (10) positioniert ist, und mit einem dritten Temperatursensor (29), der in der Drehtrommel (3) positioniert ist, verbunden ist.

## Revendications

1. Système (100) permettant de torréfier des grains de café, comprenant au moins :
- une chambre de combustion (1) dotée d'une unité (2) permettant de produire de la chaleur qui est apte à chauffer de l'air ;
- un tambour rotatif (3) permettant de torréfier des grains de café ;
- un premier conduit (4) à des fins de liaison entre la chambre de combustion (1) et le tambour rotatif (3) pour le passage de l'air chaud, de la chambre de combustion (1) au tambour rotatif (3) dans un sens d'alimentation (V) ;
- un corps tubulaire (10) doté de deux canaux (11, 12), positionné sur le premier conduit de liaison (4) entre la chambre de combustion (1) et le tambour rotatif (3) ; le corps tubulaire (10) étant doté d'une première (13) et d'une seconde (14) vanne de manière à intercepter, sur un premier canal (11) et à l'aide d'une première vanne (13), le flux d'air chaud venant de la chambre de combustion (1), ainsi que du second canal (12) et de la seconde vanne (14) configurés pour intercepter de l'air à l'extérieur du système (100), à une température inférieure à celle du flux d'air arrivant de la chambre de combustion (1), et l'acheminer dans le premier conduit (4) en aval de la première vanne (13), par rapport au sens d'alimentation (V), de manière à modifier la température du flux d'air mélangé entrant dans le tambour rotatif (3) ;
- un dispositif de commande (15) étant raccordé aux première (13) et seconde (14) vannes pour modifier leur position à l'intérieur des premier (11) et second (12) canaux correspondants, de manière à modifier le débit correspondant des flux d'air en fonction de la température requise à l'intérieur du tambour rotatif (3) ;
**caractérisé en ce que** le dispositif de commande (15) comporte des moyens (16) de liaison aux première (13) et seconde (14) vannes, de manière à déplacer simultanément les première (13) et seconde (14) vannes entre plusieurs positions intermédiaires de fonctionnement, comprises entre une première position extrême de fonctionnement, dans laquelle la première vanne (13) est positionnée de manière à fermer complètement le premier conduit (4) d'acheminement du flux d'air provenant de la chambre de combustion (1) et simultanément, la seconde vanne (14) est positionnée de manière à maintenir complètement ouvert le second canal (12), et une seconde position extrême de fonctionnement, dans laquelle la première vanne (13) est positionnée de manière à maintenir complètement ouvert le premier conduit (4) d'acheminement du flux d'air provenant de la chambre de combustion (1) et simultanément, la seconde vanne (14) est positionnée de manière à fermer complètement le second canal (12).

2. Système selon la revendication 1, dans lequel le corps tubulaire (10) pourvu de deux canaux (11, 12) est en forme de « T », doté de deux tronçons de canal de section transversale circulaire ; le premier tronçon de canal (11) définissant un raccord coaxial sur le premier conduit (4) à des fins de raccordement entre la chambre de combustion (1) et le tambour rotatif (3).

3. Système selon l'une quelconque des revendications précédentes, dans lequel chacune des première (13) et seconde (14) vannes est du type papillon et sont chacune constituée d'une plaque circulaire articulée sur les premier (11) et second (12) canaux correspondants, de manière à être apte à tourner autour d'un axe central.

4. Système selon l'une quelconque des revendications précédentes, dans lequel le dispositif de commande (15) comprend un actionneur (17) associé au corps tubulaire (10) et doté de moyens (16) de liaison aux première (13) et seconde (14) vannes pour permettre le mouvement synchronisé des première (13) et seconde (14) vannes.

5. Système selon la revendication 4, dans lequel l'actionneur (17) est associé extérieurement au second canal (12) et doté des moyens de liaison (16) comprenant un arbre motorisé (18) raccordé à la seconde vanne (14) pour permettre la rotation commandée de la seconde vanne (14) ; sur l'arbre (18) est clavetée l'extrémité d'une première bielle (19) articulée, à son tour, sur un arbre (20) à des fins d'entraînement d'une seconde bielle (21) et de liaison à celle-ci reliée à la première vanne (13), de manière à permettre le mouvement simultané des première (13) et seconde (14) vannes au moyen d'une seule activation de l'arbre motorisé (18).

6. Système selon l'une quelconque des revendications précédentes, comprenant un cyclone de décantation (8) relié, au moyen d'un deuxième conduit (9), au tambour rotatif (3) de manière à recevoir un flux d'air chaud mélangé à des impuretés aériennes et/ou solides provenant du tambour rotatif (3) et formées pendant la torréfaction.

7. Système selon la revendication 6, comprenant une unité (22) associée au cyclone de décantation (8) et configurée pour la recirculation de l'air de manière à capter à partir du cyclone de décantation (8) les impuretés aériennes et à les transporter, à l'aide d'un troisième conduit (23), vers la chambre de combustion (1) pour permettre la récupération de la chaleur résiduelle arrivant du tambour rotatif (3) et réduire les particules solides à travers un carneau d'évacuation (24) réalisé dans la chambre de combustion (1).

8. Système selon la revendication 7, dans lequel l'unité d'aspiration (22) crée un circuit de dépression en forme de boucle fermée composée, à partir de la chambre de combustion (1), du tambour rotatif (3) et du cyclone de décantation (8), de manière à permettre un flux constant et correct d'air chaud et d'air ambiant à partir du premier conduit (4).

9. Système selon l'une quelconque des revendications précédentes, comprenant une unité (25) à des fins d'introduction auxiliaire d'air débouchant dans la chambre de combustion (1) pour obtenir, si nécessaire, une étape de postcombustion de fumées devant être dirigées vers un carneau d'évacuation (24).

10. Système selon l'une quelconque des revendications précédentes, comprenant une unité de commande et de contrôle (26) raccordée au moins à la chambre de combustion (1) et aux première (13) et seconde (14) vannes pour permettre la modulation du flux d'air et de sa température à l'intérieur du tambour rotatif (3) ; l'unité de commande et de contrôle (26) étant raccordée au moins à un premier capteur de température (27) positionné à l'intérieur de la chambre de combustion (1), à un deuxième capteur de température (28) positionné sur le premier conduit de liaison (4) en aval par rapport au corps tubulaire (10), et à un troisième capteur de température (29) positionné à l'intérieur du tambour rotatif (3).
